# DEMANDE DE BREVET EUROPEEN

(11) **EP 2 800 262 A1**
(43) Date de publication de la demande: **05.11.2014**
(21) Numéro de dépôt: 14166657.8
(22) Date de dépôt: 30.04.2014
(51) Int. Cl.: H02M 3/158, H02M 7/493, H02M 1/00

(54) **Dispositif de commande d'une pluralité de convertisseurs de puissance**

(30) Priorité: 02.05.2013 FR 1354046
(71) Demandeur: Alstom Technology Ltd, 5400 Baden (CH)
(72) Inventeur: Garcia-Soto, Guillermo, 91300 MASSY (FR); Tarrade, Olivier, 75015 PARIS (FR); Lapierre, Olivier, 91190 GIF SUR YVETTE (FR)
(74) Mandataire: Ilgart, Jean-Christophe

(57) **Abrégé**

L'invention concerne un dispositif de commande de N convertisseurs de puissance montés en parallèle, le dispositif de commande comprenant des moyens de synchronisation des signaux de commande des convertisseurs de puissance, les moyens de synchronisation étant constitués:
- de moyens (M) aptes à former un signal de contrôle (Sc_{M}) constitué de N séries distinctes de messages impulsionnels, chaque série de messages impulsionnels étant constituée de messages impulsionnels de fréquence F_{C} égale à la fréquence de commande des convertisseurs de puissance, deux messages impulsionnels successifs de l'ensemble de messages impulsionnels qui constituent le signal de contrôle (Sc_{M}) étant séparés d'une durée égale à 1/NxF_{C}, et
- de moyens (D₁, D₂, D₃) aptes à former les signaux de commande des N convertisseurs sur la base d'un signal de référence (Rᵢ) et de N signaux de porteuse synchronisés, respectivement, sur les messages impulsionnels respectifs des N séries d'impulsions.

## Description

### Domaine technique et art antérieur

L'invention concerne un dispositif de commande d'une pluralité de convertisseurs de puissance montés en parallèle.

L'invention concerne également un dispositif de conversion de puissance constitué d'une pluralité de convertisseurs de puissance élémentaires montés en parallèle et d'un dispositif de commande conforme à l'invention.

Un problème rencontré dans les convertisseurs de puissance et, plus particulièrement, dans les convertisseurs de forte puissance, est celui de la forme du signal qu'ils délivrent. Le signal alternatif ou continu délivré par un convertisseur de forte puissance s'accompagne en effet d'ondulations à basse fréquence qu'il est nécessaire d'atténuer. Par « forte puissance », il faut entendre, par exemple, une puissance comprise entre quelques dizaines de kilowatts et quelques centaines de MégaWatts.

Plusieurs solutions sont connues, à ce jour, pour atténuer les ondulations à basse fréquence. Une première solution consiste à utiliser des circuits de filtrage basse fréquence en sortie du convertisseur. Du fait des fréquences à atténuer, ces circuits de filtrage sont très volumineux et donc encombrants. Une deuxième solution consiste à augmenter la vitesse de commutation du convertisseur. L'augmentation de la vitesse de commutation présente cependant l'inconvénient d'un accroissement des pertes de conversion. Une troisième solution consiste à placer plusieurs convertisseurs en parallèle, chaque convertisseur travaillant à puissance moindre, et à recombiner les signaux délivrés par les différents convertisseurs. La recombinaison des signaux est complexe à mettre en oeuvre. Cette troisième solution n'exclut pas, en outre, l'utilisation de circuits de filtrage volumineux et/ou l'augmentation de la vitesse de commutation des convertisseurs.

Le dispositif de commande de l'invention permet de réaliser des dispositifs de conversion de puissance qui ne présentent pas les inconvénients mentionnés ci-dessus.

### Exposé de l'invention

L'invention concerne un dispositif de commande de N convertisseurs de puissance montés en parallèle, N étant un nombre entier supérieur ou égal à 2, chaque convertisseur de puissance étant commandable par au moins un signal de commande constitué d'une série de messages impulsionnels de fréquence F_{C}. Le dispositif de commande est caractérisé en ce qu'il comprend des moyens de synchronisation des signaux de commande qui comprennent :
- des moyens aptes à générer un signal de contrôle constitué de N séries distinctes de messages impulsionnels, les messages impulsionnels de chaque série de messages impulsionnels ayant une fréquence F_{C}, deux messages impulsionnels successifs de l'ensemble des messages impulsionnels qui constituent le signal de contrôle étant séparés d'une durée égale à 1/NxF_{C}, les messages impulsionnels d'une même série de messages impulsionnels comprenant chacun une même donnée d'identification qui les distingue des messages impulsionnels des autres séries de messages impulsionnels,
- N moyens de sélection de messages impulsionnels, distants desdits moyens aptes à générer un signal de contrôle et reliés auxdits moyens, chaque moyen de sélection étant apte à sélectionner une série différente de messages impulsionnels parmi les N séries distinctes de messages impulsionnels, sur la base de la donnée d'identification,
- N générateurs de signal de porteuse, chaque générateur de signal de porteuse générant un signal de porteuse différent synchronisé sur les messages impulsionnels d'une série différente de messages impulsionnels, et
- N moyens de génération de signal de commande qui génèrent, chacun, un signal de commande de convertisseur de puissance différent, sur la base d'une combinaison d'un signal de porteuse délivré par un générateur de porteuse et d'un signal de référence.

Selon un mode de réalisation particulier de l'invention, chaque générateur de signal de porteuse comprend une boucle à verrouillage de phase qui génère un signal de contrôle et un générateur de signal en dents de scie qui génère un signal en dents de scie, le signal de contrôle délivré par la boucle à verrouillage de phase étant apte à caler la phase des dents de scie du signal en dents de scie sur la phase des messages impulsionnels d'une série de messages impulsionnels, et chaque moyen de génération de signal de commande est un comparateur apte à comparer le signal en dents de scie délivré par le générateur de signal en dents de scie avec un signal de référence et à délivrer un signal de commande de convertisseur de puissance.

Des moyens de transmission relient les moyens aptes à générer le signal de contrôle aux N moyens de sélection. Dans un mode de réalisation particulier de l'invention, les moyens de transmission sont des fibres optiques.

L'invention concerne également un dispositif de conversion de puissance qui comprend une pluralité de convertisseurs de puissance élémentaires montés en parallèle et un dispositif de commande de la pluralité de convertisseurs de puissance élémentaires, caractérisé en ce que le dispositif de commande est un dispositif selon l'invention.

Les signaux de commande délivrés par le dispositif de commande de l'invention sont avantageusement synchronisés avec une très grande précision (typiquement inférieure à 1µs). Cette synchronisation est avantageusement réalisée dans des configurations où les convertisseurs de puissance sont éloignés les uns des autres. Il en découle la possibilité de créer des structures de conversion de puissance ayant une grande bande passante et possédant un grand nombre de convertisseurs de puissance synchronisés éloignés les uns des autres de plusieurs dizaines de mètres. La distance entre deux convertisseurs de puissance peut ainsi atteindre, par exemple, 100m.

### Brève description des figures

D'autres caractéristiques et avantages de l'invention apparaîtront à la lecture d'un mode de réalisation préférentiel fait en référence aux figures jointes parmi lesquelles :
- La figure 1 représente un exemple de convertisseur de puissance qui comprend un dispositif de commande conforme à l'invention ;
- La figure 2 représente un dispositif de contrôle qui participe au dispositif de commande de l'invention ;
- La figure 3 représente un signal de contrôle délivré par un circuit de génération de signaux qui participe au dispositif de commande de l'invention ;
- La figure 4 illustre un exemple de dispositif de contrôle représenté en figure 2;
- La figure 5 illustre, à titre d'exemple non limitatif, la formation d'un signal de commande de convertisseur de puissance par un dispositif de contrôle conforme au dispositif de la figure 4;
- La figure 6 illustre un exemple de signal prélevé en sortie d'un convertisseur de puissance de l'invention ;
- La figure 7 représente, à titre d'exemple, le courant de sortie d'un convertisseur continu/continu formé de trois convertisseurs élémentaires et la correspondance qui existe entre le courant de sortie et les signaux de commande qui sont appliqués sur les trois convertisseurs élémentaires ;
- La figure 8 représente, à titre d'exemple, le courant de sortie d'un convertisseur continu/continu formé de huit convertisseurs élémentaires et la correspondance qui existe entre le courant de sortie et les signaux de commande qui sont appliqués sur les huit convertisseurs élémentaires.

### Exposé détaillé de modes de réalisation particuliers de l'invention

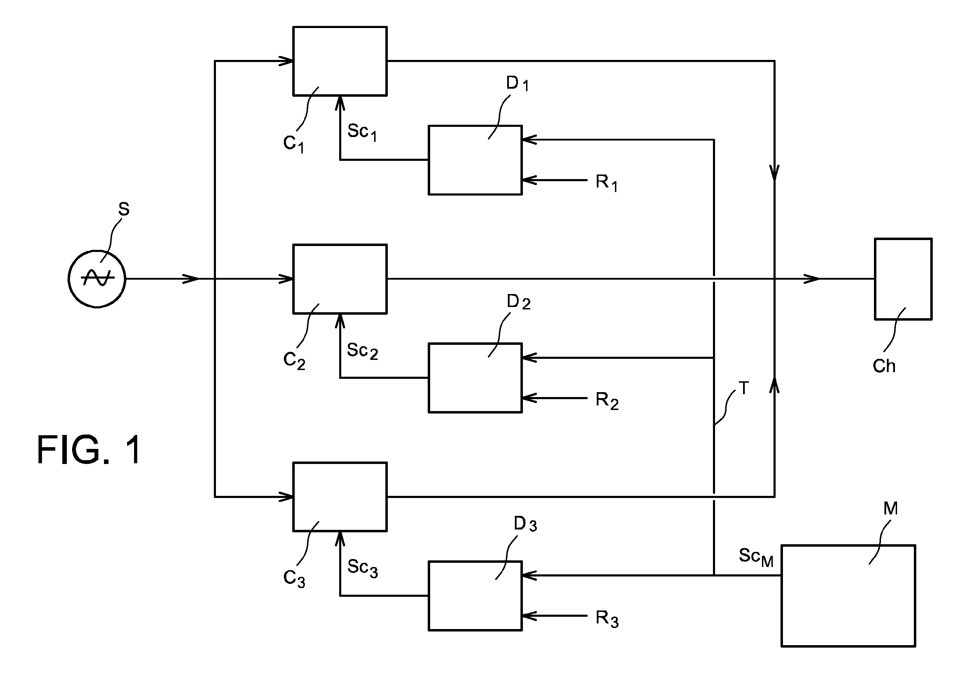

La figure 1 représente un exemple de convertisseur de puissance équipé d'un dispositif de commande conforme à l'invention.

A titre d'exemple non limitatif, le convertisseur de puissance comprend trois convertisseurs de puissance élémentaires C₁, C₂, C₃ montés en parallèle entre une source de puissance alternative S et une charge Ch. De façon plus générale, cependant, l'invention s'applique à la commande de N convertisseurs de puissance élémentaires montés en parallèle entre la source S et la charge Ch, N étant un nombre entier supérieur ou égal à 2.

Le dispositif de commande de l'invention comprend des moyens M aptes à délivrer un signal de contrôle SC_{M}, une pluralité de dispositifs de contrôle D₁, D₂, D₃ et des moyens de transmission T qui relient les moyens M à la pluralité de dispositifs de contrôle. Selon le mode de réalisation préférentiel de l'invention, les moyens de transmission T sont des fibres optiques. Chaque dispositif de contrôle Dᵢ a une première entrée sur laquelle est appliqué le signal de contrôle SC_{M} et une deuxième entrée sur laquelle est appliqué un signal de référence Rᵢ (i=1, 2, 3). Le signal de référence Rᵢ peut être différent ou identique d'un dispositif de contrôle Dᵢ à l'autre. A titre d'exemple non limitatif, le signal de référence est un signal de fréquence égale à 50Hz.

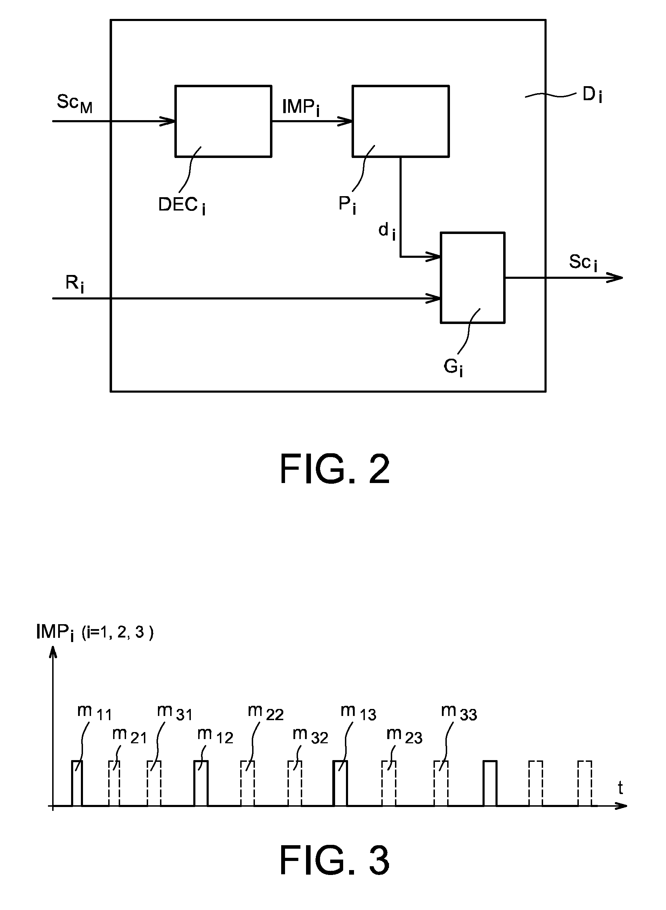

La figure 2 représente un dispositif de contrôle qui participe au dispositif de commande de l'invention.

Chaque dispositif de contrôle Dᵢ (i=1, 2, 3) comprend un circuit de décodage DECᵢ, un générateur de signal de porteuse Pᵢ et un générateur de signal de commande Gᵢ .

Le signal de contrôle SC_{M} constitue le signal d'entrée de chaque circuit de décodage DECᵢ de chaque dispositif de contrôle Dᵢ. Le signal de contrôle Sc_{M} est représenté, à titre d'exemple non limitatif, en figure 3. Il est constitué de messages impulsionnels codés de fréquence égale à 3xF_{C}, où F_{C} est la fréquence de commutation de chaque convertisseur élémentaire C₁, C₂, C₃. La fréquence F_{C} est, par exemple, égale à 900Hz. Les messages impulsionnels codés du signal de contrôle SC_{M} sont structurés sous la forme de trois séries de messages impulsionnels imbriqués IMP₁, IMP₂, IMP₃, les messages de chaque série de messages IMPᵢ (i=1, 2, 3) ayant la fréquence F_{C} (cf. Figure 3).

Chaque message impulsionnel mᵢⱼ (i=1, 2, 3) d'une série d'impulsions IMPᵢ comprend une donnée d'identification qui l'identifie comme appartenant à la seule série de messages IMPᵢ. Cette donnée d'identification est apte à être reconnue par le circuit de décodage DECᵢ du dispositif de contrôle Dᵢ. Le circuit de décodage DECᵢ constitue ainsi un moyen de sélection apte à sélectionner la série d'impulsions appropriée IMPᵢ parmi l'ensemble des séries d'impulsions qui constituent le signal SC_{M}.

Chaque générateur de signal de porteuse Pᵢ génère un signal de porteuse dᵢ synchronisé sur les messages impulsionnels de la série de messages impulsionnels IMPᵢ. Le générateur de signal de commande Gᵢ combine le signal de porteuse dᵢ et le signal de référence Rᵢ pour délivrer le signal de commande Scᵢ. Le signal de commande Scᵢ est alors synchronisé sur les messages impulsionnels de la série de messages IMPᵢ.

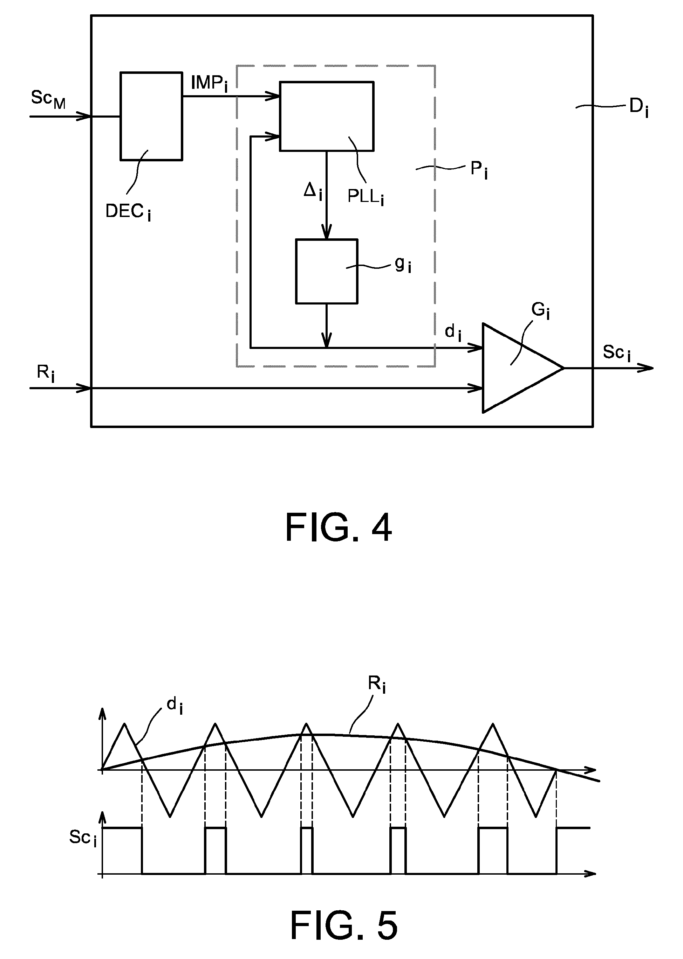

Un exemple de dispositif de contrôle Dᵢ est représenté en figure 4. Le générateur de signal de porteuse Pᵢ est constitué d'une boucle à verrouillage de phase PLLᵢ et d'un générateur de signal en dents de scie gᵢ. Le générateur de signal de commande Gᵢ est ici un comparateur.

Le générateur de signal en dents de scie gᵢ délivre un signal en dents de scie dᵢ de fréquence F_{C} qui est synchronisé sur la fréquence F_{C} de la série d'impulsions IMPᵢ. La boucle à verrouillage de phase PLLᵢ délivre, à cette fin, un signal de contrôle Aᵢ qui commande le générateur de signal en dents de scie sur la base des impulsions IMPᵢ et du signal dᵢ. Le comparateur Gᵢ reçoit sur une première entrée le signal en dents de scie dᵢ et sur une deuxième entrée le signal de référence Rᵢ. Il résulte de la comparaison faite par le comparateur le signal de commande Scᵢ.
La figure 5 représente, à titre d'exemple non limitatif, la formation d'un signal de commande Scᵢ à partir du signal en dents de scie dᵢ et d'un signal de référence Rᵢ. Le signal Scᵢ est un signal modulé en largeur d'impulsion.

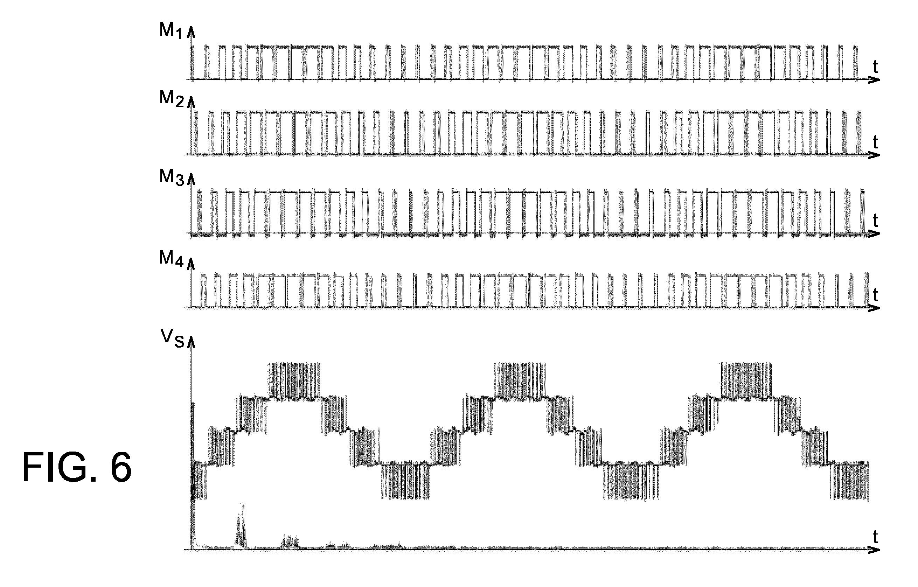

La figure 6 représente, à titre d'exemple non limitatif, des résultats de mesures qui sont prélevées sur un convertisseur de puissance constitué de quatre convertisseurs de puissance élémentaires en parallèle et commandé par un dispositif de commande conforme à l'invention. Les mesures de tension Mᵢ (i=1, 2, 3, 4) sont prélevées, respectivement, sur les sorties des quatre convertisseurs de puissance élémentaires et la tension Vₛ est la somme des mesures Mᵢ. De façon avantageuse, les mesures de tension Mᵢ sont entrelacées et décalées en phase de (π/2)xF_{C}. Par ailleurs, un calcul (non détaillé dans la présente demande ) fait apparaître des taux d'harmoniques 1, 2 et 3 quasiment nuls sur la tension de sortie du dispositif concerné.

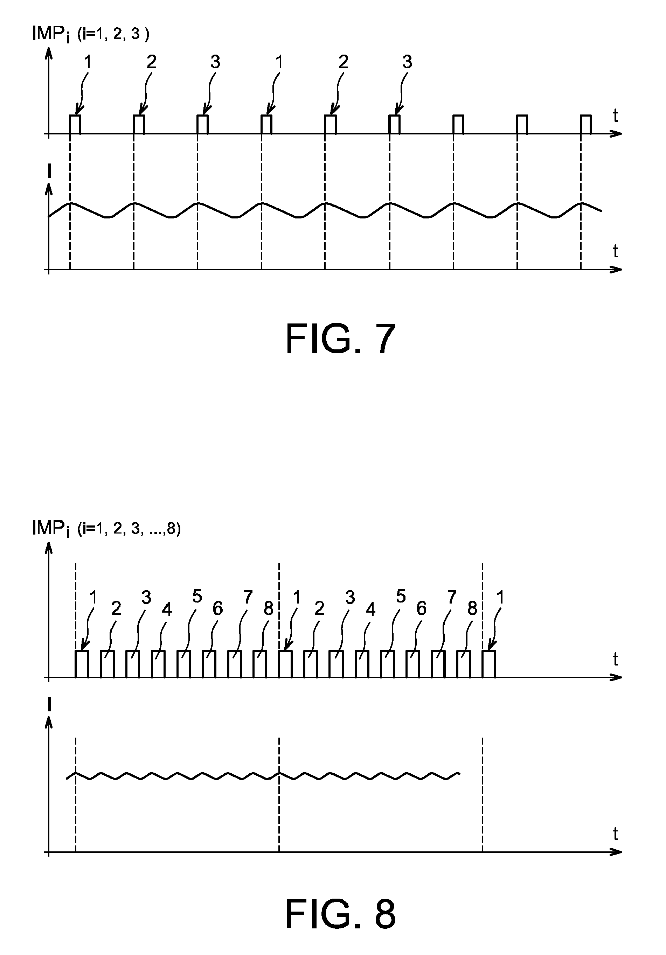

La figure 7 représente, à titre d'exemple non limitatif, le courant de sortie I d'un convertisseur continu/continu formé de trois convertisseurs élémentaires et la correspondance qui existe entre le courant de sortie I et les trois signaux de commande entrelacés IMPᵢ (i=1, 2, 3) qui sont appliqués, respectivement, sur les trois convertisseurs élémentaires. Du fait de la synchronisation quasi-parfaite des trois signaux de commande, il est possible de constater que, de façon très avantageuse, les ondulations basse fréquence des courants de sortie de chaque convertisseur élémentaire s'additionnent pour conduire à une ondulation résiduelle sensiblement inférieure à l'ondulation du courant de sortie de chaque convertisseur élémentaire.
La figure 8 illustre le même phénomène que celui de la figure 7, dans le cas où le convertisseur comprend huit convertisseurs élémentaires. L'ondulation résiduelle est encore plus faible que dans le cas précédent. D'autre part, de même que dans le cas précédent, l'ondulation résiduelle du courant de sortie est de fréquence plus élevée que l'ondulation du courant de sortie d'un convertisseur élémentaire. Il est en conséquence plus facile de la supprimer par des moyens de filtrage conventionnels.

## Revendications

1. Dispositif de commande de N convertisseurs de puissance montés en parallèle, N étant un nombre entier supérieur ou égal à 2, chaque convertisseur de puissance étant commandable par au moins un signal de commande constitué d'une série de messages impulsionnels (IMPᵢ) de fréquence F_{C}, **caractérisé en ce que** le dispositif comprend des moyens de synchronisation des signaux de commande qui comprennent :
- des moyens (M) aptes à générer un signal de contrôle (SC_{M}) constitué de N séries distinctes de messages impulsionnels, les messages impulsionnels de chaque série de messages impulsionnels ayant une fréquence F_{C}, deux messages impulsionnels successifs de l'ensemble des messages impulsionnels qui constituent le signal de contrôle (SC_{M}) étant séparés d'une durée égale à 1/N×F_{C}, les messages impulsionnels d'une même série de messages impulsionnels comprenant chacun une même donnée d'identification qui les distingue des messages impulsionnels des autres séries de messages impulsionnels,
- N moyens de sélection de messages impulsionnels (DECᵢ), distants desdits moyens aptes à générer un signal de contrôle et reliés auxdits moyens, chaque moyen de sélection étant apte à sélectionner une série différente de messages impulsionnels parmi les N séries distinctes de messages impulsionnels, sur la base de la donnée d'identification,
- N générateurs de signal de porteuse (Pᵢ), chaque générateur de signal de porteuse générant un signal de porteuse (dᵢ) différent synchronisé sur les messages impulsionnels d'une série différente de messages impulsionnels, et
- N moyens de génération de signal de commande (Gᵢ) qui génèrent, chacun, un signal de commande de convertisseur de puissance différent, sur la base d'une combinaison d'un signal de porteuse délivré par un générateur de porteuse et d'un signal de référence (Rᵢ) .

2. Dispositif de commande selon la revendication 1, **caractérisé en ce que** chaque générateur de signal de porteuse (Pᵢ) comprend une boucle à verrouillage de phase (PLLᵢ) qui génère un signal de contrôle (Δᵢ) et un générateur de signal en dents de scie (gᵢ) qui génère un signal en dents de scie, le signal de contrôle (Δᵢ) délivré par la boucle à verrouillage de phase étant apte à caler la phase des dents de scie du signal en dents de scie sur la phase des messages impulsionnels de la série différente de messages impulsionnels, et **en ce qu'**un moyen de génération de signal de commande est un comparateur apte à comparer le signal en dents de scie (dᵢ) délivré par le générateur de signal en dents de scie avec un signal de référence (R) et à délivrer un signal de commande (S_{Ci}) de convertisseur de puissance.

3. Dispositif de commande selon la revendication 1 ou 2, dans lequel des moyens de transmission (T) relient les moyens aptes à générer un signal de contrôle (M) aux N moyens de sélection (DECᵢ) .

4. Dispositif selon la revendication 3, dans lequel les moyens de transmission (T) sont des fibres optiques.

5. Dispositif de conversion de puissance comprenant une pluralité de convertisseurs de puissance élémentaires montés en parallèle et un dispositif de commande de la pluralité de convertisseurs de puissance élémentaires, **caractérisé en ce que** le dispositif de commande est un dispositif selon l'une quelconque des revendications 1 à 4.

6. Dispositif de conversion de puissance selon la revendication 5, dans lequel au moins deux convertisseurs de puissance élémentaires sont éloignés de plusieurs dizaines de mètres.
